# EUROPEAN PATENT SPECIFICATION

(11) **EP 4 382 752 B1**
(45) Date of publication and mention of the grant of the patent: **31.12.2025**
(21) Application number: 23208055.6
(22) Date of filing: 06.11.2023
(51) Int. Cl.: F16B 2/04, F16B 5/06, F16B 21/12, F16B 21/06, F16B 21/08

(54) **LATCH ASSEMBLY AND METHODS OF COUPLING THE LATCH ASSEMBLY TO A DEVICE**
VERRIEGELUNGSANORDNUNG UND VERFAHREN ZUR KOPPLUNG DER VERRIEGELUNGSANORDNUNG AN EINE VORRICHTUNG
ENSEMBLE VERROU ET PROCÉDÉS DE COUPLAGE DE L'ENSEMBLE VERROU À UN DISPOSITIF

(30) Priority: 06.12.2022 CN 202211556878
(43) Date of publication of application: 12.06.2024
(73) Proprietor: Hand Held Products, Inc., Charlotte, NC 28202 (US)
(72) Inventor: JANI, Hardik Yomesh, Charlotte, NC 28202 (US); SABER, Kevin, Charlotte, NC 28202 (US); CHENG, Hongkun, Charlotte, NC 28202 (US); YAN, Xianwei, Charlotte, NC 28202 (US); SCARFE, Paul, Charlotte, NC 28202 (US); SCHLIEFFERS, Jorg, Charlotte, NC 28202 (US)
(74) Representative: Haseltine Lake Kempner LLP

(56) References cited:
- US-A1- 2015 282 345
- US-A1- 2021 046 885

## Description

### TECHNICAL FIELD

The present application relates generally to a latch assembly, a method of coupling the latch assembly to a device, and a method of decoupling the latch assembly to the device.

### BACKGROUND

Devices, such as scanners or computers, are often selectively coupled to and selectively decoupled from docking assemblies. These docking assemblies are often mounted to structures or are wearable by a person. To allow the device to be easily and quickly coupled to and decoupled from the docking assemblies, docking assemblies are provided with latch assemblies. Often, to couple the device to the docking assembly, the device is pushed downward on top of the latch assembly of the docking assembly. However, some latch assemblies include attachment members that can only translate in a direction that is orthogonal to the downward direction. Because of this, a relatively large downward force is required to move the attachment members a sufficient distance to couple the device to the latch assembly of the dock assembly. This relatively large force may have a negative impact on the perceived quality of the docking assembly. Through applied effort, ingenuity, and innovation, many of these identified deficiencies and problems have been solved by developing solutions that are structured in accordance with the embodiments of the present disclosure, many examples of which are described in detail herein.

US 2021/046885 A1 discloses a mobile device mounting system including a device case and a mount. The device case includes: an insert including a rectangular bore and defining a set of undercut sections about the rectangular bore; and a first set of magnetic elements arranged in a first pattern about the rectangular bore. The mount includes: a body; a polygonal boss extending from the body and configured to insert into the rectangular bore; a set of locking jaws arranged on the polygonal boss configured to transiently mate with the set of undercut sections to constrain the polygonal boss within the rectangular bore; and a second set of magnetic elements arranged in a second pattern about the polygonal boss and configured to transiently couple to the first set of magnetic elements to transiently retain the mount against the device case and to drive the set of locking jaws toward the set of undercut sections.

### BRIEF SUMMARY

In general, embodiments of the present disclosure provided herein include methods and apparatuses to provide for improved latch assemblies, improved methods of coupling a device to a latch assembly, and improved methods of decoupling the device from the latch assembly. The present invention is defined in the independent claim 1, to which reference should now be made. Advantageous features are set out in the sub claims. The improved latch assemblies include attachment members that are configured to couple to the device and are pivotable. Attachment members that are configured to pivot, rather than configured to translate in one direction, may require less force to move the attachment members to a position so that the device can be coupled and/or decoupled to the latch assembly.

In various aspects, a latch assembly for coupling with a device is provided. The latch assembly defines an X direction, a Y direction that is orthogonal to the X direction, and a Z direction that is orthogonal to the X direction and to the Y direction. The latch assembly further defines a centerline that extends along the Z direction. The centerline defines an inward direction and an outward direction.

In various examples, the latch assembly includes a first attachment member, a second attachment member, and an actuating member.

In various examples, the actuating member is configured to move from a first position to a second position along the Z direction, and the actuating member is configured to exert an inward force onto the first attachment member and onto the second attachment member when the actuating member is in the second position.

In various examples, the latch assembly includes a biasing member that is configured to pivot at least one of the first attachment member or the second attachment member in the outward direction when the actuating member is moved from the second position to the first position.

In various examples, the first attachment member and the second attachment member are closer to the centerline when the actuating member is in the second position than in the first position.

In various examples, the biasing member is positioned between the first attachment member and the second attachment member.

In various examples, the biasing member is configured to exert an outward force onto the first attachment member and onto the second attachment member.

In various examples, the biasing member causes each of the first attachment member and the second attachment member to pivot in the outward direction when the actuating member is moved from the second position to the first position.

In various examples, when the actuating member is in the second position, the inward force is greater than the outward force.

In various examples, when the actuating member is in the first position, the outward force is greater than the inward force.

In various examples, the actuating member includes a first arm and a second arm. An opening is defined between the first arm and the second arm.

In various examples, the opening is a V-shaped opening.

In various examples, the first arm and the second arm each comprise a proximal end and a distal end.

In various examples, a first distance between the first arm and the second arm at the distal end is greater than a second distance between the first arm and the second arm at the proximal end.

In various examples a distance between the first arm and the second arm progressively increases from the proximal end to the distal end.

In various examples, the first attachment member and the second attachment member are arranged symmetrically in relation to the centerline.

In various examples, the actuating member includes a button portion.

In various examples, the button portion is positioned closer to the first attachment member and the second attachment member in the second position than in the first position.

In various examples, the first attachment member is configured to pivot on a first axis and the second attachment member is configured to pivot on a second axis,

In various examples, the first attachment member and the second attachment member are configured to pivot closer to the centerline when the actuating member is in the second position than in the first position.

In various examples, the first axis and the second axis extend in the Z direction.

In various examples, the first attachment member comprises a first clip portion and the second attachment member comprises a second clip portion.

In various examples, the first clip portion and the second clip portion extend in the outward direction.

In various examples, the first clip portion and the second clip portion are configured to be coupled to the device.

In various examples, the first attachment member comprises a first channel and the second attachment member comprises a second channel.

In various examples, the first arm is configured to be slidingly engageable with the first channel of the first attachment member and the second arm is configured to be slidingly engageable with the second channel of the second attachment member.

In various aspects, a docking assembly for coupling with a device is provided.

In various aspects, the docking assembly includes a docking portion including a protruding portion configured to be engaged with the device.

In various aspects, the docking assembly includes a latch assembly configured to be coupled to the docking portion and selectively coupled with the device. The latch assembly defining an X direction, a Y direction that is orthogonal to the X direction, and a Z direction that is orthogonal to the X direction and to the Y direction, the latch assembly defining a centerline that extends along the Z direction, wherein the centerline defines an inward direction and an outward direction.

In various examples, the latch assembly includes a first attachment member, a second attachment member, and an actuating member configured to move from a first position to a second position along the Z direction.

In various examples, the actuating member is configured to exert an inward force onto the first attachment member and onto the second attachment member when the actuating member is in the second position.

In various examples, the first attachment member and the second attachment member are closer to the centerline when the actuating member is in the second position than in the first position.

In various examples, the latch assembly includes a biasing member that is configured to pivot at least one of the first attachment member or the second attachment member in the outward direction when the actuating member is moved from the second position to the first position.

In various examples, the biasing member causes each of the first attachment member and the second attachment member to pivot in the outward direction when the actuating member is moved from the second position to the first position.

In various examples, the actuating member includes a first arm and a second arm.

In various examples, the first arm and the second arm each include a proximal end and a distal end.

In various examples, a distance between the first arm and the second arm progressively increases from the proximal end to the distal end.

In various examples, the first attachment member includes a first clip portion and the second attachment member includes a second clip portion.

In various examples, the first clip portion and the second clip portion extend in the outward direction.

In various examples, the first attachment member is configured to pivot on a first axis and the second attachment member is configured to pivot on a second axis.

In various examples, the first attachment member and the second attachment member are configured to pivot closer to the centerline when the actuating member is in the second position than in the first position.

In various aspects, a method of decoupling a latch assembly from a device is provided, the latch assembly defining an X direction, a Y direction that is orthogonal to the X direction, and a Z direction that is orthogonal to the X direction and to the Y direction, the latch assembly defining a centerline that extends along the Z direction, wherein the centerline defines an inward direction and an outward direction.

In various examples, the method includes moving an actuating member from a first position to a second position along the Z direction.

In various examples, the method includes exerting an inward force onto a first attachment member of the latch assembly and onto a second attachment member of the latch assembly with the actuating member when the actuating member is moved to the second position.

In various examples, the method includes pivoting the first attachment member of the latch assembly and the second attachment member of the latch assembly towards the centerline.

In various examples, moving the actuating member from the first position to the second position causes the inward force to be exerted onto the first attachment member and onto the second attachment member, which causes the pivoting of the first attachment member and the second attachment member, which allows for the latch assembly to be decoupled from the device.

In various aspects, a method of coupling a latch assembly to a device is provided, the latch assembly defining an X direction, a Y direction that is orthogonal to the X direction, and a Z direction that is orthogonal to the X direction and to the Y direction, the latch assembly defining a centerline that extends along the Z direction, wherein the centerline defines an inward direction and an outward direction.

In various examples, the method includes pushing a device onto the latch assembly in a downward direction.

In various examples, the method includes pivoting a first attachment member and a second attachment member of the latch assembly in an inward direction towards a centerline of the latch assembly.

In various examples, the method includes aligning a first clip portion of the first attachment member and a second clip portion of the second attachment member with a groove of the device.

In various examples, the method includes pivoting the first attachment member and the second attachment member of the latch assembly in an outward direction away from the centerline of the latch assembly.

The above summary is provided merely for purposes of summarizing some example embodiments to provide a basic understanding of some aspects of the present disclosure. Accordingly, it will be appreciated that the above-described embodiments are merely examples and should not be construed to narrow the present disclosure in any way. It will be appreciated that the scope of the present disclosure, which is defined by the appended claims, encompasses many potential embodiments in addition to those here summarized, some of which will be further described below. Other features, aspects, and advantages of the subject matter will become apparent from the description, the drawings, and the claims.

### BRIEF DESCRIPTION OF THE DRAWINGS

Having thus described certain example embodiments of the present disclosure in general terms above, non-limiting and non-exhaustive embodiments of the subject disclosure are described with reference to the following figures, which are not necessarily drawn to scale and wherein like reference numerals refer to like parts throughout the various views unless otherwise specified. The components illustrated in the figures may or may not be present in certain embodiments described herein. Some embodiments may include fewer (or more) components than those shown in the figures.
FIG. 1 provides a side view of a docking assembly, in accordance with an example embodiment.
FIG. 2 provides a perspective view of a latch assembly, in accordance with an example embodiment.
FIG. 3 provides a perspective view of the latch assembly of FIG. 2, in accordance with an example embodiment.
FIG. 4 provides a perspective, cross-sectional view of the latch assembly of FIG. 2, in accordance with an example embodiment.
FIG. 5 provides a perspective, cross-sectional view of the latch assembly of FIG. 2, in accordance with an example embodiment.
FIG. 6 provides a flowchart of a method of decoupling a latch assembly from a device, in accordance with an example embodiment.
FIG. 7 provides a flowchart of a method of coupling a latch assembly to a device, in accordance with an example embodiment.

### DETAILED DESCRIPTION

One or more embodiments are now more fully described with reference to the accompanying drawings, wherein like reference numerals are used to refer to like elements throughout and in which some, but not all embodiments of the inventions are shown. In the following description, for purposes of explanation, numerous specific details are set forth in order to provide a thorough understanding of the various embodiments. It is evident, however, that the various embodiments can be practiced without these specific details. It should be understood that some, but not all embodiments are shown and described herein. Indeed, the embodiments may be embodied in many different forms, and accordingly this disclosure should not be construed as limited to the embodiments set forth herein. Rather, these embodiments are provided so that this disclosure will satisfy applicable legal requirements.

As used herein, the terms "coupled," "fixed," "attached to," and the like refer to both direct coupling, fixing, or attaching, as well as indirect coupling, fixing, or attaching through one or more intermediate components or features, unless otherwise specified herein.

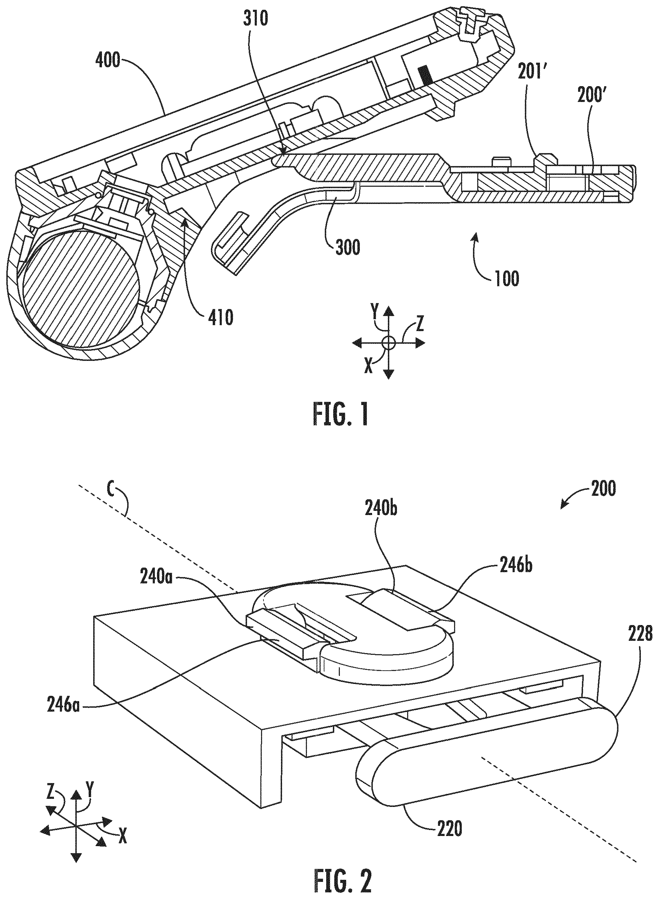

Referring now to FIG. 1, a side view of a docking assembly 100 is provided, in accordance with an example embodiment. The docking assembly 100 can include a latch assembly 200' and a docking portion 300. The latch assembly 200' can be coupled to the docking portion 300 and can define an X direction (in and out of page), a Y direction, and a Z direction. As seen in this example, the docking portion 300 of the docking assembly 100 can include a protruding portion 310 for mating with a device 400.

In various examples, the docking assembly 100 is adapted to be wearable by a person. For example, the docking assembly 100 can include an arm strap that wraps around the arm of the person. In another example, the docking assembly 100 can be configured to attach to a hand of the person. However, in other examples, the docking assembly 100 can be configured to mount to a structure. For example, the docking assembly 100 can be adapted to mount to machinery (e.g., a conveyor), a vehicle (e.g., a forklift, a side loader, or a car (e.g., a dash of the car)), a storage cart (e.g., a rolling picking bin cart), to a workstation or desk, or a computer station (e.g., a rolling mobile computer workstation).

As shown in FIG. 1, the protruding portion 310 of the docking portion 300 can be engageable with the device 400. For example, the protruding portion 310 of the docking portion 300 can be mated with a corresponding feature 410 of the device 400. In various examples, the device 400 can be a computer, such as a scanner, a mobile computer, or a portable computer.

The protruding portion 310 of the docking portion 300 can be mated with the corresponding feature 410 of the device 400 by inserting the protruding portion 310 into the corresponding feature 410 at an angle and pressing the device 400 downward (along the Y direction) onto the latch assembly 200'. Pressing the device 400 downward onto the latch assembly 200' may cause a hooked portion 201' of the latch assembly 200 to translate inward (to the left in this view) along only the Z direction. Once the hooked portion 201' is translated inward along only the Z direction and the hooked portion 201' is positioned in a groove (not shown) of the device 400, the hooked portion 201' is translated outward (to the right in this view) along only along the Z direction by a biasing member (not shown). Translating the hooked portion 201' along only the Z direction may have some disadvantages. For example, because the hooked portion 201' is only able to translate along the Z direction, which is orthogonal to the downward movement of the device 400 in the Y direction, a relatively large force in the Y direction may be necessary to translate the hooked portion 201' in the Z direction. This relatively large force to translate the hooked portion 201' and couple the docking assembly 100 to the device 400 may negatively affect the experience of the user of the docking assembly 100. As such, an improved latch assembly 200 (FIG. 2) for a docking assembly 100 would be welcomed in the art.

Referring now to FIG. 2, a perspective view of a latch assembly 200 is provided, in accordance with an example embodiment. The latch assembly 200 defines an X direction, a Y direction that is orthogonal to the X direction, and a Z direction that is orthogonal to the X direction and to the Y direction The latch assembly 200 defines a centerline C that extends along the Z direction. The centerline defines an inward direction that extends toward the centerline C along the X direction and an outward direction that extends away from the centerline C along the X direction.

As shown in this example, the latch assembly 200 can include a first attachment member 240a, a second attachment member 240b, and an actuating member 220. The first attachment member 240a can include a first clip portion 246a and the second attachment member 240b can include a second clip portion 246b. The first clip portion 246a and the second clip portion 246b can be configured to be coupled to a device 400 (FIG. 1). For example, the first clip portion 246a and the second clip portion 246b can each be configured to mate with a groove (not shown) of the device 400. In various examples, the clip portions 246a, 246b can be have a tongue and groove configuration with the corresponding groove of the device 400 to couple the clip portions 246a, 246b with the corresponding groove of the device 400.

The actuating member 220 can include a button portion 228 that can be pressed to decouple the first clip portion 246a and the second clip portion 246b from the device 400. As will be explained in further detail, pressing the button portion 228 may move the actuating member 220 from a first position to a second position along the Z direction. Moving the actuating member 220 from the first position to the second position can position the button portion 228 of the actuating member 220 closer to the first attachment member 240a and the second attachment member 240b.

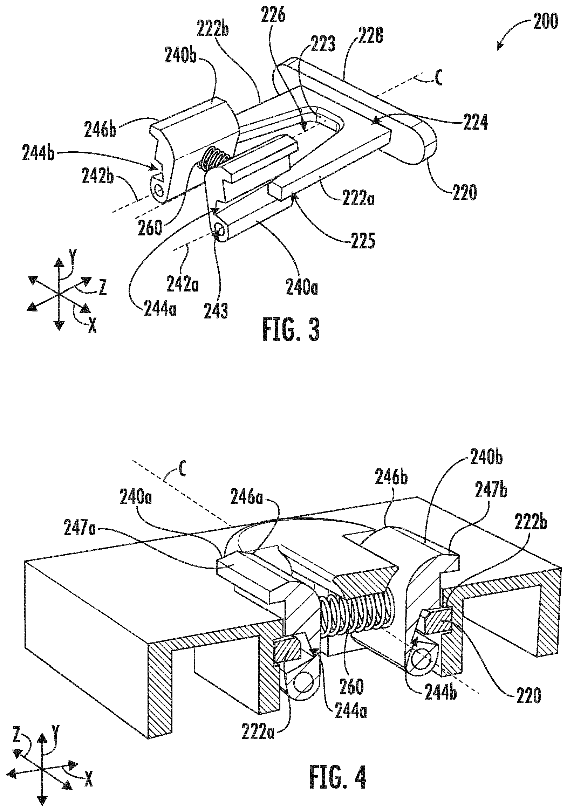

Referring now to FIG. 3, a perspective view of the latch assembly 200 of FIG. 2 is provided, in accordance with an example embodiment. As best seen in this view, the actuating member 220 of the latch assembly 200 includes the button portion 228, a first arm 222a, and a second arm 222b. The first arm 222a and the second arm 222b can extend from the button portion 228. An opening 226 can be defined between an inner surface 223 of the first arm 222a and an inner surface 223 of the second arm 222b. Each of the first arm 222a and the second arm 222b can define a proximal end 224 and a distal end 225, the proximal end 224 being closer to the button portion 228 than the distal end 225.

As best seen in this view, a distance between the first arm 222a and the second arm 222b at their distal ends 225 can be greater than a distance between the first arm 222a and the second arm 222b at their proximal ends 224. In various examples, and as shown, the distance between the first arm 222a and the second arm 222b can progressively increase from their proximal ends 224 to their distal ends 225. Stated differently, the inner surface 223 of the first arm 222a and the second arm 222b can form a V-shape, which defines a V-shaped opening 226. However, in various other examples, the inner surface 223 of the first arm 222a and the second arm 222b can have other shapes. For example, the inner surface 223 of the first arm 222a and the 222b can have a staircase shape with curved corners.

Still referring to FIG. 3, the first attachment member 240a and the second attachment member 240b of the latch assembly 200 can be arranged symmetrically in relation to the centerline C and can each include a clip portion 246a, 246b. Each of the clip portions 246a, 246 can extend in the outward direction away from the centerline C. Additionally, the first attachment member 240a can be pivotable on a first axis 242a and the second attachment member 240b can be pivotable on a second axis 242b. The first axis 242a and the second axis 242b can each extend generally along the Z axis (e.g., within 10 degrees of the Z axis, such as within 5 degrees of the Z axis, such as within 2 degrees of the Z axis). The first axis 242a and the second axis 242b can be on opposite sides of the centerline C such that they are arranged symmetrically in relation to the centerline C.

As shown in the view of FIG. 3, the latch assembly 200 can also include a biasing member 260 that is positioned between the first attachment member 240a and the second attachment member 240b for exerting an outward force onto both the first attachment member 240a and the second attachment member 240b, the outward force extending away from the centerline C. The outward force exerted on the first attachment member 240a and the second attachment member 240b can cause the first attachment member 240a to pivot on the first axis 242a and the second attachment member 240b to pivot on the second axis 242b. More specifically, the outward force exerted on the first attachment member 240a and the second attachment member 240b can cause the first attachment member 240a to pivot on the first axis 242a in the outward direction and away from the centerline C and can cause the second attachment member 240b to pivot on the second axis 242b in the outward direction and away from the centerline C. In various examples, the biasing member is, or includes, a spring. For example, the biasing member can be, or include, a helical spring, a leaf spring, or a disk spring.

In other examples, the latch assembly 200 can include two or more biasing members 260 (e.g., two, three, or four biasing members 260). For example, the latch assembly 200 can include two or more biasing members 260 that are each positioned between the first attachment member 240a and the second attachment member 240b, each being configured to exert an outward force onto both the first attachment member 240a and the second attachment member 240b. In yet another example, the latch assembly 200 can include a wall (not shown) between the first attachment member 240a and the second attachment member 240b. One or more first biasing members 260 can be positioned between the wall and the first attachment member 240a. Similarly, one or more second biasing members 260 can be positioned between the wall and the second attachment member 240b. The one or more first biasing member 260 can each be configured to exert an outward force onto both the first attachment member 240a and the wall, whereas the one or more second biasing member 260 can each be configured to exert an outward force onto both the second attachment member 240 and the wall.

Other devices and configurations for pivoting the first attachment member 240a on the first axis 242a and the second attachment member 240b on the second axis 242b in an outward direction away from the centerline C are contemplated. For example, biasing members 260 can be positioned on outward sides of the first attachment member 240a and the second attachment member 240b to pull the first attachment member 240a and the second attachment member 240 in the outward direction. In yet other examples, a device to exert circumferential force can be included in an orifice 243 that is located on each of the first axis 242a and the second axis 242b to pivot the first attachment member 240a on the first axis 242a and the second attachment member 240b on the second axis 242b. For example, a helical spring that is pre-tensioned can be included in each of the orifices 243.

Still referring to FIG. 3, the first attachment member 240a can include a first channel 244a and the second attachment member 240b can include a second channel 244b. The first channel 244a of the first attachment member 240a can be configured to receive the first arm 222a of the actuating member 220, whereas the second channel 244b of the second attachment member 240b can be configured to receive the second arm 222b of the actuating member 220. In various examples, and as shown, the first arm 222a of the actuating member 220 can be configured to be slidingly engageable with the first channel 244a of the first attachment member 240a, whereas the second arm 222b of the actuating member 220 can be configured to be slidingly engageable with the second channel 244b of the second attachment member 240b.

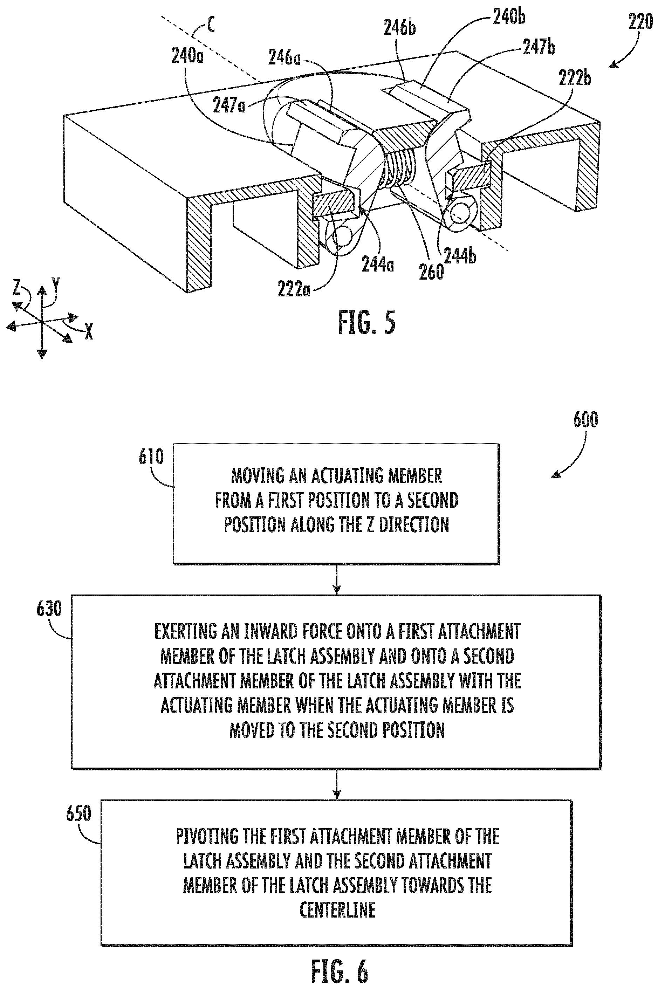

Referring now to FIGS. 4 and 5, perspective, cross-sectional views of the latch assembly 200 of FIG. 2 is provided, in accordance with an example embodiment. More specifically, FIG. 4 provides a view of the latch assembly 200 of FIG. 2 with the actuating member 220 in the first position, and FIG. 5 provides a view of the latch assembly 200 of FIG. 2 with the actuating member 220 in the second position. As mentioned, the actuating member 220 of the latch assembly 200 can be configured to move from a first position to a second position along the Z direction. As best seen in FIG. 5, the first arm 222a of the actuating member 220 is configured to exert an inward force on the first attachment member 240a, and the second arm 222b of the actuating member 220 is configured to exert an inward force on the second attachment member 240b when the actuating member 220 is in the second position. The inward forces exerted on the first attachment member 240a and the second attachment member 240b may cause the first attachment member 240a and the second attachment member 240b to pivot inward towards the centerline C. Additionally, the inward forces exerted on the first attachment member 240a and the second attachment member 240b causes the first clip portion 246a of the first attachment member 240a and the second clip portion 246b of the second attachment member 240b to pivot inwards towards and closer to the centerline C.

As mentioned, and with reference to FIG. 4, the biasing member 260 of the latch assembly 200 is positioned between the first attachment member 240a and the second attachment member 240b for exerting an outward force onto both the first attachment member 240a and the second attachment member 240b, the outward force extending away from the centerline C. When the actuating member 220 is in the first position, as shown in FIG. 4, the biasing member 260 has an outward force that is greater than the inward force that is exerted on the first attachment member 240a and the second attachment member 240b. As such, the first attachment member 240a and the second attachment member 240b are pushed outward and further away from the centerline C when the actuating member 220 is in the first position. In contrast, when the actuating member 220 is in the second position, as shown in FIG. 5, the inward force that is exerted on the first attachment member 240a and the second attachment member 240b by the actuating member 220 is greater than the outward force exerted on the first attachment member 240a and the second attachment member 240b by the biasing member 260. As such, the first attachment member 240a and the second attachment member 240b are pushed inward and closer to the centerline C when the actuating member 220 is in the second position.

As mentioned, the first arm 222a of the actuating member 220 can be configured to be slidingly engageable with the first channel 244a of the first attachment member 240a, whereas the second arm 222b of the actuating member 220 can be configured to be slidingly engageable with the second channel 244b of the second attachment member 240b. As best seen in the views of FIG. 4 and FIG. 5, this engagement of the first arm 222a and the second arm 222b with the first channel 244a and the second channel 244b causes the inward force to be exerted on the first attachment member 240a and the second attachment member 240b.

Referring still to FIGS. 4 and 5, the first clip portion 246a can include a downward slope portion 247a and the second clip portion 246b can include a downward slope portion 247b. The surface of the downward slope portions 247a, 247b can be angled downwards towards a plane defined by the X axis and the Z axis and away from a plane defined by the Y axis and the centerline C. For example, the downward slope portions 247a and 247b can each define an angle in relation to the plane defined by the X axis and the Z axis that is 45 degrees or less, such as at least 15 degrees and up to 45 degrees, such as at least 15 degrees and up to 30 degrees. The downward slope portions 247a, 247b can allow for the first attachment member 240a and the second attachment member 240 to pivot inwards towards the centerline C when a device 400 is pushed downward onto the latch assembly 200.

Referring now to FIG.6, a flowchart of a method 600 of decoupling a latch assembly 200 from a device 400 is provided, in accordance with an example embodiment. The method 600 can include the step 610 of moving an actuating member 220 from a first position to a second position along the Z direction. When the actuating member 220 is in the first position, the attachment member prevents the latch assembly 200 from being decoupled from the device 400. The method 600 can include the step 630 of exerting an inward force onto a first attachment member 240 of the latch assembly 200 and onto a second attachment member 240 of the latch assembly 200 with the actuating member 220 when the actuating member 220 is moved to the second position. The method 600 can include the step 650 of pivoting the first attachment member 240 of the latch assembly 200 and the second attachment member 240 of the latch assembly 200 towards the centerline.

The step 610 of moving the actuating member 220 from the first position to the second position may cause the inward force to be exerted onto the first attachment member 240 and onto the second attachment member 240. The step 630 of exerting the inward force onto the first attachment and the second attachment member 240 may cause the pivoting of the first attachment member 240 and the second attachment member 240. The step 650 of pivoting the first attachment member 240 and the second attachment member 240 may allow the latch assembly 200 to be decoupled from the device 400.

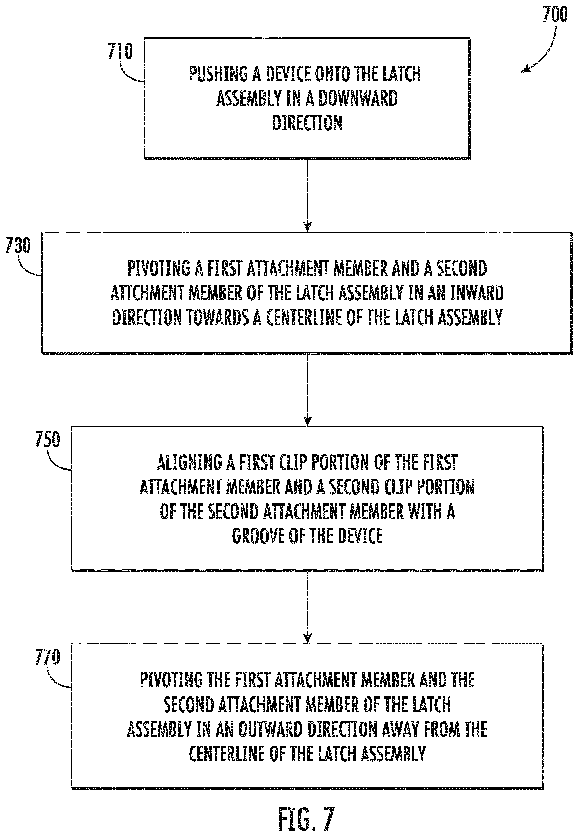

Referring now to FIG. 7, a flowchart of a method 700 of coupling a latch assembly 200 to a device 400 is provided, in accordance with an example embodiment. The method 700 can include the step 710 of pushing the device 400 onto the latch assembly 200 in a downward direction. The method 700 can include the step 730 of pivoting a first attachment member 240 and a second attachment member 240 of the latch assembly 200 in an inward direction towards a centerline of the latch assembly 200. For example, the first attachment member 240 and the second attachment member 240 can include the downward slope portions 247a, 247b, which can cause the first attachment member 240a and the second attachment member 240 to pivot inwards due to the downward force caused by pushing the device 400 onto the latch assembly 200. The method 700 can include the step 750 of aligning a first clip portion 246a of the first attachment member 240 and a second clip portion 246b of the second attachment member 240 with a groove of the device 400. The method 700 can include the step 770 of pivoting the first attachment member 240 and the second attachment member 240 of the latch assembly 200 in an outward direction away from the centerline of the latch assembly 200. For example, the biasing member 260 can impart an outward force on the first attachment member 240 and the second attachment member 240, which causes them to pivot in the outward direction.

Incorporating pivotable attachment members, such as first attachment member 240 and second attachment member 240, into latch assemblies has several benefits. For example, and as will be appreciated by those skilled in the art, when coupling the device 400 to the docking assembly 100 (FIG.1), the required downward force to move translatable hooks 201' (FIG. 1) in an orthogonal direction to couple the device 400 to the latch assembly 200' may be greater than the required downward force to pivot pivotable attachment members 240a, 240b (FIG. 2) to a point necessary to couple the device 400 to the latch assembly 200. Decreasing the amount of downward force required to couple the device 400 from the latch assembly 200 may increase the user experience and/or give a better perception of quality of the device 400.

Moreover, the word "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

In addition, while a particular feature may have been disclosed with respect to only one of several implementations, such feature may be combined with one or more other features of the other implementations as may be desired and advantageous for any given or particular application. Furthermore, to the extent that the terms "includes" and "including" and variants thereof are used in either the detailed description or the claims, these terms are intended to be inclusive in a manner similar to the term "comprising."

### Conclusion

The above descriptions of various embodiments of the subject disclosure and corresponding figures and what is described in the Abstract, are described herein for illustrative purposes, and are not intended to be exhaustive or to limit the disclosed embodiments to the precise forms disclosed. It is to be understood that one of ordinary skill in the art may recognize that other embodiments having modifications, permutations, combinations, and additions can be implemented for performing the same, similar, alternative, or substitute functions of the disclosed subject matter, and are therefore considered within the scope of this disclosure. Therefore, the disclosed subject matter should not be limited to any single embodiment described herein, but rather should be construed in breadth and scope in accordance with the appended claims below. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A latch assembly (200) for coupling with a device (400), the latch assembly (200) defining an X direction, a Y direction that is orthogonal to the X direction, and a Z direction that is orthogonal to the X direction and to the Y direction, the latch assembly (200) defining a centerline that extends along the Z direction, wherein the centerline defines an inward direction and an outward direction, the latch assembly (200) comprising:
a first attachment member (240a);
a second attachment member (240b);
an actuating member (220), comprising a first arm (222a) and a second arm (222b), configured to move from a first position to a second position along the Z direction, wherein the actuating member (220) is configured to exert an inward force onto the first attachment member (240a) and onto the second attachment member (240b) to pivot in the inward direction when the actuating member (220) is in the second position,
wherein each of the first arm (222a) and the second arm (222b) comprises a proximal end (224) and a distal end (225), wherein a distance between the first arm (222a) and the second arm (222b) progressively increases from the proximal end (224) to the distal end (225) to form a V-shape of the actuating member (220);
a biasing member (260) configured to pivot at least one of the first attachment member (240a) or the second attachment member (240b) in the outward direction when the actuating member (220) is moved from the second position to the first position.

2. The latch assembly (200) of claim 1, wherein the biasing member (260) is positioned between the first attachment member (240a) and the second attachment member (240b), the biasing member (260) configured to exert an outward force onto the first attachment member (240a) and onto the second attachment member (240b), which causes each of the first attachment member (240a) and the second attachment member (240b) to pivot in the outward direction when the actuating member (220) is moved from the second position to the first position.

3. The latch assembly (200) of claim 2, wherein when the actuating member (220) is in the second position, the inward force is greater than the outward force.

4. The latch assembly (200) of claim 2, wherein when the actuating member (220) is in the first position, the outward force is greater than the inward force.

5. The latch assembly (200) of claim 1, wherein an opening (226) is defined between the first arm (222a) and the second arm (222b).

6. The latch assembly (200) of claim 5, wherein the opening (226) is a V-shaped opening.

7. The latch assembly of claim 1, wherein a first distance between the first arm and the second arm at the distal end is greater than a second distance between the first arm and the second arm at the proximal end.

8. The latch assembly (200) of claim 1, wherein the first attachment member (240a) and the second attachment member (240b) are arranged symmetrically in relation to the centerline.

9. The latch assembly (200) of claim 1, wherein the actuating member (220) comprises a button portion (228), wherein the button portion (228) is positioned closer to the first attachment member (240a) and the second attachment member (240b) in the second position than in the first position.

10. The latch assembly (200) of claim 1, wherein the first attachment member (240a) is configured to pivot on a first axis (242a) and the second attachment member (240b) is configured to pivot on a second axis (242b), and wherein the first attachment member (240a) and the second attachment member (240b) are configured to pivot closer to the centerline when the actuating member (220) is in the second position than in the first position.

11. The latch assembly (200) of claim 10, wherein the first axis (242a) and the second axis (242b) extend in the Z direction.

12. The latch assembly (200) of claim 1, wherein the first attachment member (240a)comprises a first clip portion (246a) and the second attachment member (240b) comprises a second clip portion (246b), wherein the first clip portion (246a) and the second clip portion (246b) extend in the outward direction.

13. The latch assembly (200) of claim 12, wherein the first clip portion (246a) and the second clip portion (246b) are configured to be coupled to the device (400).

14. The latch assembly (200) of claim 1, wherein the first attachment member (240a) comprises a first channel (244a) and the second attachment member (240b) comprises a second channel (244b), and wherein the first arm (222a) is configured to be slidingly engageable with the first channel (244a) of the first attachment member (240a) and the second arm (222b) is configured to be slidingly engageable with the second channel (244b) of the second attachment member (240b).

## Patentansprüche

1. Verriegelungsanordnung (200) zur Kopplung mit einer Vorrichtung (400), wobei die Verriegelungsanordnung (200) eine X-Richtung, eine zur X-Richtung rechtwinklige Y-Richtung und eine zur X-Richtung und zur Y-Richtung rechtwinklige Z-Richtung definiert, wobei die Verriegelungsanordnung (200) eine Mittellinie definiert, die sich entlang der Z-Richtung erstreckt, wobei die Mittellinie eine Richtung nach innen und eine Richtung nach außen definiert, wobei die Verriegelungsanordnung (200) umfasst:
ein erstes Befestigungselement (240a);
ein zweites Befestigungselement (240b);
ein Betätigungselement (220), umfassend einen ersten Arm (222a) und einen zweiten Arm (222b), das so konfiguriert ist, dass es sich entlang der Z-Richtung von einer ersten Position zu einer zweiten Position bewegt, wobei das Betätigungselement (220) so konfiguriert ist, dass es eine nach innen gerichtete Kraft auf das erste Befestigungselement (240a) und auf das zweite Befestigungselement (240b) ausübt, um in die Richtung nach innen zu schwenken, wenn sich das Betätigungselement (220) in der zweiten Position befindet,
wobei jeweils der erste Arm (222a) und der zweite Arm (222b) ein proximales Ende (224) und ein distales Ende (225) umfassen, wobei sich der Abstand zwischen dem ersten Arm (222a) und dem zweiten Arm (222b) vom proximalen Ende (224) zum distalen Ende (225) zunehmend erhöht, um eine V-Form des Betätigungselements (220) zu bilden;
ein Vorspannelement (260), das so konfiguriert ist, dass es mindestens eines des ersten Befestigungselements (240a) oder des zweiten Befestigungselements (240b) in die Richtung nach außen schwenkt, wenn das Betätigungselement (220) von der zweiten Position in die erste Position bewegt wird.

2. Verriegelungsanordnung (200) nach Anspruch 1, wobei das Vorspannelement (260) zwischen dem ersten Befestigungselement (240a) und dem zweiten Befestigungselement (240b) positioniert ist, wobei das Vorspannelement (260) so konfiguriert ist, dass es eine nach außen gerichtete Kraft auf das erste Befestigungselement (240a) und auf das zweite Befestigungselement (240b) ausübt, was bewirkt, dass sich sowohl das erste Befestigungselement (240a) als auch das zweite Befestigungselement (240b) in die Richtung nach außen schwenken, wenn das Betätigungselement (220) von der zweiten Position in die erste Position bewegt wird.

3. Verriegelungsanordnung (200) nach Anspruch 2, wobei, wenn sich das Betätigungselement (220) in der zweiten Position befindet, die nach innen gerichtete Kraft größer ist als die nach außen gerichtete Kraft.

4. Verriegelungsanordnung (200) nach Anspruch 2, wobei, wenn sich das Betätigungselement (220) in der ersten Position befindet, die nach außen gerichtete Kraft größer ist als die nach innen gerichtete Kraft.

5. Verriegelungsanordnung (200) nach Anspruch 1, wobei zwischen dem ersten Arm (222a) und dem zweiten Arm (222b) eine Öffnung (226) definiert ist.

6. Verriegelungsanordnung (200) nach Anspruch 5, wobei die Öffnung (226) eine V-förmige Öffnung ist.

7. Verriegelungsanordnung nach Anspruch 1, wobei ein erster Abstand zwischen dem ersten Arm und dem zweiten Arm am distalen Ende größer ist als ein zweiter Abstand zwischen dem ersten Arm und dem zweiten Arm am proximalen Ende.

8. Verriegelungsanordnung (200) nach Anspruch 1, wobei das erste Befestigungselement (240a) und das zweite Befestigungselement (240b) symmetrisch in Bezug auf die Mittellinie angeordnet sind.

9. Verriegelungsanordnung (200) nach Anspruch 1, wobei das Betätigungselement (220) einen Knopfabschnitt (228) umfasst, wobei der Knopfabschnitt (228) in der zweiten Position näher am ersten Befestigungselement (240a) und am zweiten Befestigungselement (240b) positioniert ist als in der ersten Position.

10. Verriegelungsanordnung (200) nach Anspruch 1, wobei das erste Befestigungselement (240a) so konfiguriert ist, dass es um eine erste Achse (242a) schwenkt, und das zweite Befestigungselement (240b) so konfiguriert ist, dass es um eine zweite Achse (242b) schwenkt, und wobei das erste Befestigungselement (240a) und das zweite Befestigungselement (240b) so konfiguriert sind, dass sie näher an der Mittellinie schwenken, wenn sich das Betätigungselement (220) in der zweiten Position befindet, als in der ersten Position.

11. Verriegelungsanordnung (200) nach Anspruch 10, wobei sich die erste Achse (242a) und die zweite Achse (242b) in Z-Richtung erstrecken.

12. Verriegelungsanordnung (200) nach Anspruch 1, wobei das erste Befestigungselement (240a) einen ersten Clipabschnitt (246a) umfasst und das zweite Befestigungselement (240b) einen zweiten Clipabschnitt (246b) umfasst, wobei sich der erste Clipabschnitt (246a) und der zweite Clipabschnitt (246b) in die Richtung nach außen erstrecken.

13. Verriegelungsanordnung (200) nach Anspruch 12, wobei der erste Clipabschnitt (246a) und der zweite Clipabschnitt (246b) konfiguriert sind, um mit der Vorrichtung (400) gekoppelt zu sein.

14. Verriegelungsanordnung (200) nach Anspruch 1, wobei das erste Befestigungselement (240a) einen ersten Kanal (244a) umfasst und das zweite Befestigungselement (240b) einen zweiten Kanal (244b) umfasst, und wobei der erste Arm (222a) konfiguriert ist, um gleitend mit dem ersten Kanal (244a) des ersten Befestigungselements (240a) in Eingriff bringbar zu sein, und der zweite Arm (222b) konfiguriert ist, um gleitend mit dem zweiten Kanal (244b) des zweiten Befestigungselements (240b) in Eingriff bringbar zu sein.

## Revendications

1. Ensemble de verrouillage (200) pour le couplage avec un dispositif (400), l'ensemble de verrouillage (200) définissant une direction X, une direction Y qui est orthogonale à la direction X, et une direction Z qui est orthogonale à la direction X et à la direction Y, l'ensemble de verrouillage (200) définissant une ligne centrale qui se prolonge le long de la direction Z, dans lequel la ligne centrale définit une direction vers l'intérieur et une direction vers l'extérieur, l'ensemble de verrouillage (200) comprenant :
un premier élément de fixation (240a) ;
un deuxième élément de fixation (240b) ;
un élément d'actionnement (220), comprenant un premier bras (222a) et un deuxième bras (222b), configurés pour se déplacer d'une première position à une deuxième position le long de la direction Z, dans lequel l'élément d'actionnement (220) est configuré pour exercer une force vers l'intérieur sur le premier élément de fixation (240a) et sur le deuxième élément de fixation (240b) pour pivoter dans la direction vers l'intérieure lorsque l'élément d'actionnement (220) est dans la deuxième position,
dans lequel chacun du premier bras (222a) et du deuxième bras (222b) comprend une extrémité proximale (224) et une extrémité distale (225), dans lequel une distance entre le premier bras (222a) et le deuxième bras (222b) augmente progressivement de l'extrémité proximale (224) vers l'extrémité distale (225) pour former une forme en V de l'élément d'actionnement (220) ;
un élément de sollicitation (260) configuré pour faire pivoter au moins l'un du premier élément de fixation (240a) ou du deuxième élément de fixation (240b) dans la direction vers l'extérieur lorsque l'élément d'actionnement (220) est déplacé de la deuxième position à la première position.

2. Ensemble de verrouillage (200) selon la revendication 1, dans lequel l'élément de sollicitation (260) est positionné entre le premier élément de fixation (240a) et le deuxième élément de fixation (240b), l'élément de sollicitation (260) étant configuré pour exercer une force vers l'extérieur sur le premier élément de fixation (240a) et sur le deuxième élément de fixation (240b), ce qui fait pivoter chacun du premier élément de fixation (240a) et du deuxième élément de fixation (240b) dans la direction vers l'extérieur lorsque l'élément d'actionnement (220) est déplacé de la deuxième position à la première position.

3. Ensemble de verrouillage (200) selon la revendication 2, dans lequel lorsque l'élément d'actionnement (220) est dans la deuxième position, la force vers l'intérieur est supérieure à la force vers l'extérieur.

4. Ensemble de verrouillage (200) selon la revendication 2, dans lequel lorsque l'élément d'actionnement (220) est dans la première position, la force vers l'extérieur est supérieure à la force vers l'intérieur.

5. Ensemble de verrouillage (200) selon la revendication 1, dans lequel une ouverture (226) est définie entre le premier bras (222a) et le deuxième bras (222b).

6. Ensemble de verrouillage (200) selon la revendication 5, dans lequel l'ouverture (226) est en forme de V.

7. Ensemble de verrouillage selon la revendication 1, dans lequel une première distance entre le premier bras et le deuxième bras à l'extrémité distale est supérieure à une deuxième distance entre le premier bras et le deuxième bras à l'extrémité proximale.

8. Ensemble de verrouillage (200) selon la revendication 1, dans lequel le premier élément de fixation (240a) et le deuxième élément de fixation (240b) sont disposés symétriquement par rapport à la ligne centrale.

9. Ensemble de verrouillage (200) selon la revendication 1, dans lequel l'élément d'actionnement (220) comprend une partie bouton (228), dans lequel la partie bouton (228) est positionnée plus près du premier élément de fixation (240a) et du deuxième élément de fixation (240b) dans la deuxième position que dans la première position.

10. Ensemble de verrouillage (200) selon la revendication 1, dans lequel le premier élément de fixation (240a) est configuré pour pivoter sur un premier axe (242a) et le deuxième élément de fixation (240b) est configuré pour pivoter sur un deuxième axe (242b), et dans lequel le premier élément de fixation (240a) et le deuxième élément de fixation (240b) sont configurés pour pivoter plus près de la ligne centrale lorsque l'élément d'actionnement (220) est dans la deuxième position que dans la première position.

11. Ensemble de verrouillage (200) selon la revendication 10, dans lequel le premier axe (242a) et le deuxième axe (242b) se prolongent dans la direction Z.

12. Ensemble de verrouillage (200) selon la revendication 1, dans lequel le premier élément de fixation (240a) comprend une première partie d'attache (246a) et le deuxième élément de fixation (240b) comprend une deuxième partie d'attache (246b), dans lequel la première partie d'attache (246a) et la deuxième partie d'attache (246b) se prolongent dans la direction vers l'extérieur.

13. Ensemble de verrouillage (200) selon la revendication 12, dans lequel la première partie d'attache (246a) et la deuxième partie d'attache (246b) sont configurées pour être couplées au dispositif (400).

14. Ensemble de verrouillage (200) selon la revendication 1, dans lequel le premier élément de fixation (240a) comprend un premier canal (244a) et le deuxième élément de fixation (240b) comprend un deuxième canal (244b), et dans lequel le premier bras (222a) est configuré pour pouvoir venir en prise coulissante avec le premier canal (244a) du premier élément de fixation (240a) et le deuxième bras (222b) est configuré pour pouvoir venir en prise coulissante avec le deuxième canal (244b) du deuxième élément de fixation (240b).
